# EUROPEAN PATENT SPECIFICATION

(11) **EP 4 084 925 B1**
(45) Date of publication and mention of the grant of the patent: **17.09.2025**
(21) Application number: 20908467.2
(22) Date of filing: 30.12.2020
(51) Int. Cl.: B23K 26/21, B23K 26/06, B23K 103/10

(54) **METHOD FOR REDUCING HAZARDOUS BYPRODUCT FROM WELDING ALUMINIUM USING LASER BEAM**
VERFAHREN ZUR REDUKTION VON GEFÄHRLICHEN NEBENPRODUKT AUS ALUMINIUM-SCHWEISSEN UNTER VERWENDUNG VON EINEM LASERSTRAHL
PROCÉDÉ POUR RÉDUIRE UN SOUS-PRODUIT DANGEREUX DURANT LE SOUDAGE DE L'ALUMINIUM À L'AIDE D'UN FAISCEAU LASER

(30) Priority: 30.12.2019 WO PCT/US2019/068996; 11.04.2020 US 202063008722 P
(43) Date of publication of application: 09.11.2022
(73) Proprietor: Nuburu, Inc., Centennial, CO 80112 (US)
(72) Inventor: FINUF, Mathew, Castle Rock, CO 80108 (US); ZEDIKER, Mark, S., Castle Rock, CO 80104 (US); BOESE, Eric, Centennial, CO 80112 (US); FRITZ, Robert, D., Aurora, CO 80016 (US)
(74) Representative: KBN IP Patentanwälte Partnerschaft mbB
(86) International application number: PCT/US2020/067591
(87) International publication number: WO 2021/138510

(56) References cited:
- WO-A1-2018/157159
- CN-U- 206 747 804
- US-A- 4 224 499
- US-A1- 2006 275 623
- US-A1- 2017 341 144
- US-A1- 2017 341 144
- US-A1- 2018 236 605

## Description

The present invention relates to improved laser processing of materials, and in particular to a method of forming a weld in aluminium based materials, see claim 1. The present invention mitigates, reduces and eliminates the formation of hazardous materials, including hazardous particulates that are formed by IR welding techniques.

IR, ultrasonic and resistance welding of metals, for example aluminum, can produce hazardous materials, including hazardous particles. The production of these hazardous byproducts is caused, among other things, by poor weld formation, poor weld quality, and the welding processes by these methods in general. One of these hazards is the production of aluminum powders, e.g., metallic aluminum, aluminum oxide, aluminum hydroxide. The hazards from these materials, such as aluminum powder has become of increasing concerns as, the need for such welds and welding is increasing. For example, one market where these needs, and result problems with formation of hazardous materials is in the area of high performance electronics for the growing electronic vehicle market. A welding technique that reduces, preferably mitigates, and more preferably eliminates the formation of such hazardous materials is needed in general, and especially needed, for example, to produce high performance batteries and electronics for the growing automotive markets, while at the same time maintaining the speed and performance to be economical and meet the weld specifications for that industry.

When using an IR laser source at 1030 nm, the high reflectivity of the metal, e.g., aluminum, copper at this wavelength makes it difficult to couple power into the material to heat and weld it. This difficulty in coupling power is caused, for example, by the low absorption at room temperature at wavelengths at and above 1,000 nm, e.g., aluminum (8%), copper (5%), which prevents efficient power coupling into the metal. As the power starts to couple into the metal and the metal starts to heat up the absorption in the IR increases rapidly resulting in a runaway process that goes directly to vaporization and particle generation.

One method to overcome the high reflectivity is to use a high-power level (> 1kW) IR laser to initiate a keyhole weld which then couples the power into the material. The problems with this method of welding, among other things, is that the vapor in the keyhole can lead to a micro-explosion, spraying molten aluminum all over the parts being welded or the micro-explosion can cause a hole completely through the parts being welded. Consequently, researchers have had to rely on rapidly modulating the laser power to try to prevent these defects during welding. It has been discovered that the defects are a direct result of the process itself, as the laser attempts to weld the metal, it initially heats it up to the melting point and then it rapidly transitions into vaporizing the metal. Once the metal vaporizes the keyhole is formed and the laser coupling rises rapidly from the initial 5% to 100%, this transition occurs so rapidly that the amount of heat coupled in rapidly exceeds the amount of heat needed to weld the parts, resulting in the micro-explosion described.

These micro-explosions and spatterings, caused by the IR welding processes creates metallic dusts. The metallic dusts can present health issues, can be flammable, can present explosive risks, and combinations and variations of these, and other detrimental effects. For example, aluminum dust, is small (e.g., microns and submicron sizes) aluminum based particles, such as metallic aluminum, aluminum oxide, aluminum hydroxide. Inhalation of aluminum dust can cause health problems, such as metal fume fever, and pulmonary fibrosis. Significantly, Aluminum dust, is a flammable solid and a dangerous fire hazard. Presence of aluminum dust, having a particle size of smaller than about 500 microns, can create an explosion risk and hazard.

During fabricating operations, aluminum fines may be generated by such activities as grinding, sawing, cutting, sanding, IR laser welding or scratch brushing and at least some of them will be fine enough to be potentially explosible. The term "dust" or "powder" is frequently used to describe such particles. It is difficult to be specific about dimensions, but if all the particles are larger than 500 microns, an explosion will probably not be sustained. However, this material is still a flammable solid. It is more likely, however, that a mixture of coarser and finer material will be generated, and if the material is 420 microns (40 mesh) or finer, then it has the potential for explosion. Finer particles burn readily when their ignition point is reached, and tend to ignite the coarser particles as well. In the case of aluminum, an explosion can result if ignition occurs while the particles are suspended in air as a dust cloud, since the burning extends from one particle to another with extreme speed.

Laser welding of metals, e.g., aluminum with current infrared lasers method and systems is challenging, and has problems, due to the high reflectivity of the metals. Attempts to overcome this problem, with IR lasers have uncontrolled spatter and unpredictable variability in the welds, and produce metal powders, e.g., aluminum based powders. In an attempt to manage the dangers of the production of aluminum powders large, complex and expensive air handling and management systems are required. While potentially moving the aluminum based powered away from the operators, the factor must nevertheless handle and dispose of the hazardous flammable powder. Thus, there is an important, and long standing need to reduce, preferably mitigate, and more preferably eliminate the formation of such hazardous byproduct powders, e.g., aluminum powder.

One of the more difficult aluminum welding process is the how to weld stacks of aluminum foil to each other and to thicker bus bars. Today, this cannot be done with an IR laser reliably or in a manner that produces the weld qualities that are needed by manufactures. Thus, manufacturers have relied on ultrasonic welding methods to bond these foils together. These ultrasonic methods are also less than optimal and are problematic. For example, with ultrasonic welding methods, the sonotrodes can wear during production resulting in process variabilities ranging from incomplete welds to welds with debris (aluminum powder) left behind. These deficiencies limit the manufacturing yield, the internal resistance of batteries, the energy density of the resulting batteries and in many cases the reliability of the batteries. Moreover, these process produce hazardous metal powders, such as aluminum based powders.

The term "aluminum based material" unless expressly provided otherwise, should be given it broadest possible meaning and would include aluminum, 6061 aluminum, 1100 aluminum, aluminum series 1,100 to 7,000, aluminum materials, aluminum metal, materials electroplated with aluminum, metallic materials that contain from at least about 10% aluminum by weight to 100% aluminum, metals and alloys containing from at least about 10% aluminum by weight to 100% aluminum by weight, metals and alloys containing from at least about 20% aluminum by weight to 100% aluminum by weight, metals and alloys containing from at least about 10% aluminum by weight to 100% aluminum by weight, metals and alloys containing from at least about 50% aluminum by weight to 100% aluminum by weight, metals and alloys containing from at least about 70% aluminum by weight to 100% aluminum by weight, and metals and alloys containing from at least about 90% aluminum by weight to 100% aluminum by weight.

The terms "laser processing, "laser processing of materials," and similar such terms, unless expressly provided otherwise, should be given there broadest possible meaning and would include welding, soldering, smelting, joining, annealing, softening, tackifying, resurfacing, peening, thermally treating, fusing, sealing, and stacking.

As used herein, unless expressly stated otherwise, "UV", "ultra violet", "UV spectrum", and "UV portion of the spectrum" and similar terms, should be given their broadest meaning, and would include light in the wavelengths of from about 10 nm to about 400 nm, and from 10 nm to 400 nm.

As used herein, unless expressly stated otherwise, the terms "visible", "visible spectrum", and "visible portion of the spectrum" and similar terms, should be given their broadest meaning, and would include light in the wavelengths of from about 380 nm to about 750 nm, and 400 nm to 700 nm.

As used herein, unless expressly stated otherwise, the terms "blue laser beams", "blue lasers" and "blue" should be given their broadest meaning, and in general refer to systems that provide laser beams, laser beams, laser sources, e.g., lasers and diodes lasers, that provide, e.g., propagate, a laser beam, or light having a wavelength from about 400 nm to about 500 nm. Typical blue lasers have wavelengths in the range of 405 nm - 495 nm, and about 405 to about 495 nm. Blue lasers include wavelengths of 450 nm, of about 450 nm, of 460 nm, of about 460, of about 470 nm. Blue lasers can have bandwidths of from about 10 pm (picometer) to about 10 nm, about 5 nm, about 10 nm and about 20 nm, as well as greater and smaller values.

As used herein, unless expressly stated otherwise, the terms "green laser beams", "green lasers" and "green" should be given their broadest meaning, and in general refer to systems that provide laser beams, laser beams, laser sources, e.g., lasers and diodes lasers, that provide, e.g., propagate, a laser beam, or light having a wavelength from about 500 nm to about 575 nm. Green lasers include wavelengths of 515 nm, of about 515 nm, of 532 nm, about 532 nm, of 550 nm, and of about 550 nm. Green lasers can have bandwidths of from about 10 pm to 10 nm, about 5 nm, about 10 nm and about 20 nm, as well as greater and smaller values.

As used herein, unless expressly stated otherwise terms such as "at least", "greater than", also mean "not less than" ,i.e., such terms exclude lower values unless expressly stated otherwise.

As used herein the term "intermetallic", unless expressly provided otherwise, should be given its broadest possible meaning and would include all types of metallic alloy that form an ordered solid-state compound between two or more metallic elements. Intermetallic are generally hard and brittle. The term Intermetallics includes all classification of intermetallics, including stoichiometric and nonstoichiometic intermetallic compounds.

As used herein, unless specified otherwise, the recitation of ranges of values, a range, from about "x" to about "y", and similar such terms and quantifications, serve as merely shorthand methods of referring individually to separate values within the range. Thus, they include each item, feature, value, amount or quantity falling within that range. As used herein, unless specified otherwise, each and all individual points within a range are incorporated into this specification, and are a part of this specification, as if they were individually recited herein.

As used herein, unless stated otherwise, room temperature is 25° C. And, standard temperature and pressure is 25° C and 1 atmosphere. Unless expressly stated otherwise all tests, test results, physical properties, and values that are temperature dependent, pressure dependent, or both, are provided at standard temperature and pressure.

Generally, the term "about" and the symbol "~" as used herein, unless specified otherwise, are meant to encompass a variance or range of ±10%, the experimental or instrument error associated with obtaining the stated value, and preferably the larger of these.

This Background of the Invention section is intended to introduce various aspects of the art, which may be associated with embodiments of the present inventions. Thus, the forgoing discussion in this section provides a framework for better understanding the present inventions, and is not to be viewed as an admission of prior art. Document US 2017/0341144 A1 (describing the preamble of claim 1) shows a blue laser system and operation for welding conductive elements together for use in energy storage devices.

### SUMMARY

There has been a long standing, increasing and unfulfilled need for welding of metals and, in particular, the welding of aluminum metals for electronic components and batteries without the production of metal powders and other hazardous materials. Included in these needs, there is the need for an improved method for welding aluminum to itself and other metals. including welding stacks of aluminum foils and these stacks to thicker aluminum or aluminum parts or copper parts, without the production of aluminum based powders and hazardous materials. The present invention, among other things, solves these needs by providing the articles of manufacture, devices and processes taught, and disclosed herein.

Thus, a first aspect of the present invention provides a method claim 1, of forming a weld in aluminium based materials according to claim 1.

Further preferred embodiments of the first aspect of present invention are defined in the dependent claims.

### BRIEF DESCRIPTION OF THE DRAWINGS

FIG. 1 is a photograph of the top surface of an embodiment of a lap weld of aluminum sheets in accordance with the present inventions.
FIG. 2 is a photograph of the bottom surface of the weld of FIG. 1.
FIG. 3 is a photograph of the cross section of the weld of FIG. 1.
FIG. 4 is a photograph of the top surface of an embodiment of a butt weld of aluminum sheets in accordance with the present inventions.
FIG. 5 is a photograph of the bottom surface of the weld of FIG. 4..
FIG. 6 is photograph of the cross section of the weld of FIG. 4.
FIG. 7 is a photograph of an embodiment of an aluminum prismatic cell and pouch cell battery leads welded in accordance with the present inventions.
FIG. 8 is an enlarged, and annotated photograph of the cross section of the weld of FIG. 7.
FIG. 8A is an enlargement of a section of FIG. 8.
FIG. 9 is the absorption curve for a variety of metals and shows the difference in the absorption between and IR laser a visible laser.
FIG. 10 is a schematic view of an embodiment of a conduction mode weld propagation into the material in accordance with the present inventions.
FIG. 11 is a schematic view of an embodiment of a keyhole weld propagation into the material in accordance with the present inventions.
FIG. 12 is a perspective view of an embodiment of a part holder for laser welding in accordance with the present inventions.
FIG. 12A is a cross sectional view of the part holder of FIG. 12.
FIG. 13 is a perspective view of an embodiment of a part holder for to hold thin parts to make a lap weld in accordance with the present inventions.
FIG. 13A is a cross sectional view of the part holder of FIG. 13A.

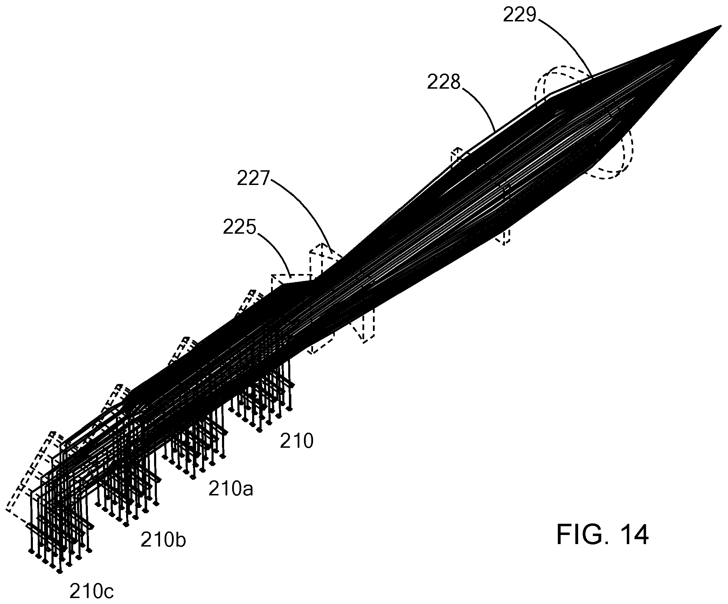

FIG. 14 is a schematic of an embodiment of a 150 Watt blue laser system for use in performing embodiments of the present laser welding methods in accordance with the present inventions.

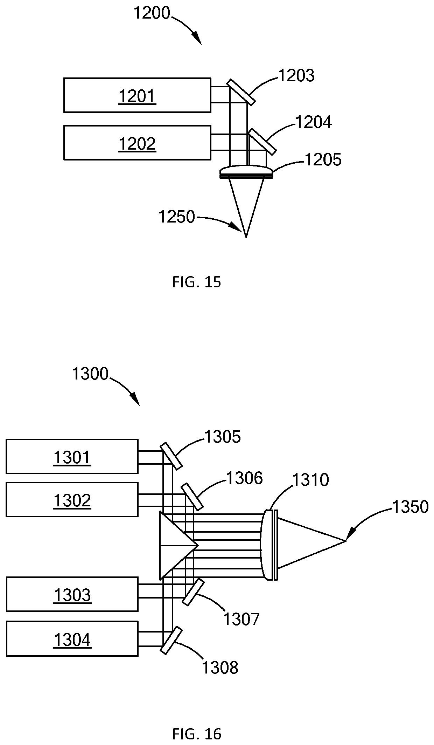

FIG. 15 is a schematic ray trace diagram of an embodiment of using two 150 Watt blue laser systems to make a 300 Watt blue laser system in accordance with the present inventions.
FIG. 16 is a schematic ray trace diagram of an embodiment of using four 150 Watt blue laser systems to make an 800 Watt blue laser system in accordance with the present inventions.
FIG. 17 is a graph of an embodiment of aluminum 1100 BOP testing showing penetration (*µ*m) vs. speed m/min in accordance with the present inventions.
FIG. 18 is a graph of an embodiment of aluminum 110 butt weld testing, showing penetration (*µ*m) vs. speed m/min in accordance with the present inventions.

### DESCRIPTION OF THE PREFERRED EMBODIMENTS

In general, the present disclosure relates to lasers, laser beams, systems and methods for welding metals, which mitigate, reduce and eliminate the formation of hazardous materials, including hazardous particulates that are formed by other welding techniques and in particular that are formed by IR laser welding techniques.

The laser beam has a wavelength in the blue wavelengths, and which mitigates, reduces and eliminates the formation of hazardous materials, including hazardous particulates that are formed by other welding techniques and in particular that are formed by IR laser welding techniques.
The present invention eliminates
the formation of the metallic dusts, which can present health issues, can be flammable, can present explosive risks, and combinations and variations of these, and other detrimental effects. For example, aluminum dust, is small (e.g., micron and submicron sizes) aluminum based particles, such as metallic aluminum, aluminum oxide, aluminum hydroxide. Inhalation of aluminum dust can cause health problems, such as metal fume fever, and pulmonary fibrosis. Significantly, Aluminum dust is a flammable solid and a dangerous fire hazard. Presence of aluminum dust in a confided area can create an explosive risk and hazard.

The present invention provides for the laser welding of aluminum based materials with little to no aluminum dust. Thus, for example, the present invention provides for the reduced formation of aluminum dust, such that concentration (mg/letter of air) is below explosive levels. Both air borne and solid aluminum powder is regulated in the United State, Europe and other countries. Aluminum powder can be very hazardous, it is a flammable solid, it can be explosive, and it can be used to make explosives.

A standard for aluminum dust is promulgated by the National Fire Protection Association (USA). The tests to be performed are outlined in NFPA 484 (rev. 2019) "Standard for Combustible Metals". The results of the tests will determine the applicability of NFPA 484 to the facility. NFPA 484 applies to any facility that processes, handles or stores any metal that is in a form that is capable of combustion or explosion. If any changes are made in the process which generates the fines, fresh samples should always be tested for re- determination of the minimum explosive concentration and ignition energy. Changes in speed, alloy, surface coating such as wax, lubricant or abrasive used may cause finer particles to develop and thus increase the potential hazard.

According to the present invention, the present laser welding techniques, using wavelengths in blue ranges, aluminum dust production is at or below the thresholds and safety limits established by NFPA-484 (rev. 2019).

The use of larger spot sizes for blue wavelengths, further reduces or eliminates spatter and production of Aluminum dust. For example, spot sizes can be employed that greater than 100 *µ*m, greater than 200 *µ*m.

The present invention provides high quality welds, high welding speeds, and both for metal based materials for electronic components, including batteries, with little to no formation of metal powder as describe in this specification. In an embodiment, the present inventions provide high quality welds, high welding speeds, and both for aluminum based materials for automotive electronic components, including batteries, with little to no formation of metal powder as describe in this specification.

The present laser techniques, welding processes, laser beams and systems for performing these welding process can be the laser beams from these emitters are combined by using, for example, combinations of spatial, spectral, coherent, Raman, and polarization methods. The systems and methods of providing laser beams taught and disclosed in US Patent Publication Nos. 2016/0322777, 2018/0375296, 2016/0067827 and 2019/0273365, and US patent application serial numbers 16/695,090 and 16/558 140.

In an embodiment of the present invention, a high power blue laser source (e.g., ~450 nm) provides stable welding in many welding techniques, including the conduction and keyhole welding modes. This system and method minimizes, reduces and preferably eliminates, vaporization, spatter, micro explosions, and combinations and variations of these, and provides a process that reduces and prevents the formation of aluminum dust. In an embodiment blue laser welding of aluminum at power levels ranging from 150 Watts to 275 Watts with a spot size of ~ 200 *µ*m achieves good welds, without the formation of hazardous aluminum dust, as described in this specification.

In embodiments blue laser welding of aluminum at power levels ranging from about 300 Watts to about 500 Watts, from about 500 W to about 1 kW, from 750 W to 1.5 kW, and greater powers, and having spot sizes of ~100 *µ*m, ~200 *µ*m, see the range defined in claim 1, achieve good welds, at economically viable speeds, without the formation of hazardous aluminum dust, as described in this specification, including. combinations and variations.

Preferably, in embodiments the laser wavelengths can be in wavelengths from 350 nm to 500 nm.
The spot can be circular, elliptical, linear, square or other patterns. Preferably, the laser beam is continuous. In embodiments the laser beam can be pulsed, for example from about 1 microsecond and longer. This technique produces good welds in aluminum based materials, without the formation of hazardous aluminum dust, as described in this specification.

Focus point and the position of the focus point, and depth of penetration of the laser beam into the Aluminum material further provide the ability to reduce and eliminate spatter and the formation of Aluminum dust. Typically, the deeper the penetration of the laser beam, and the deeper the focus point the greater the reduction and elimination of spatter and dust.

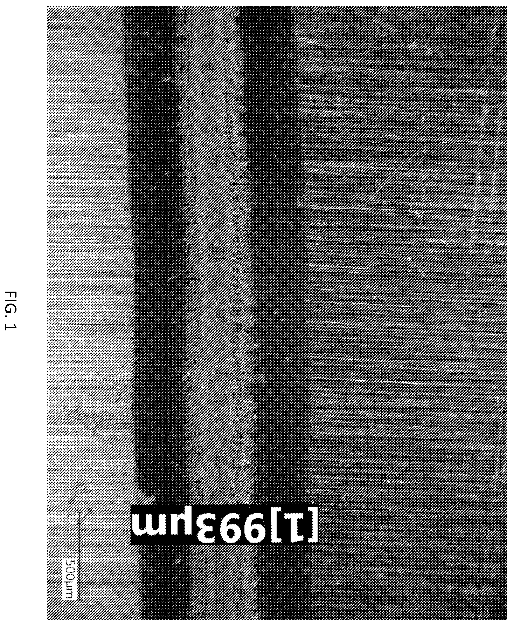

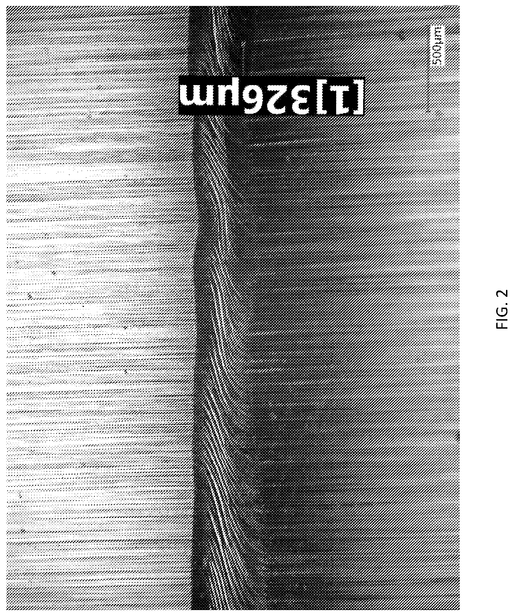

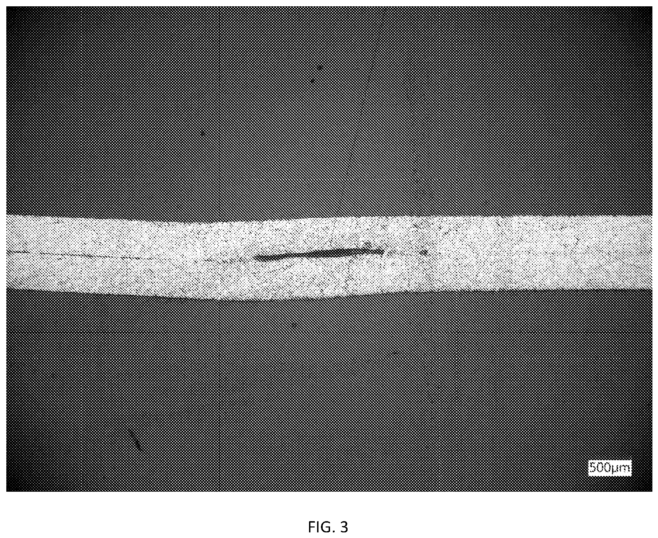

Turning to FIGS. 1 to 3 there are shown photographs of a lap weld of 200um to 200um aluminum sheets, utilizing 500W of laser power at 30mm/sec. Argon process gas is utilized at 50cfh. A 0.4 second dwell time provides enough time for the laser to cut through existing oxide layers and form a suitable melt pool to propagate along a linear path down the length of the material. FIG. 1 depicts the top surface. FIG 2 .depicts the bottom surface. FIG. 3 depicts the cross section of the weld. The etchant does not reveal the crystal structure of the aluminum, however little to no visible difference is seen between welded areas and non-welded areas. Little to no HAZ exists. Little to no oxidation exists.

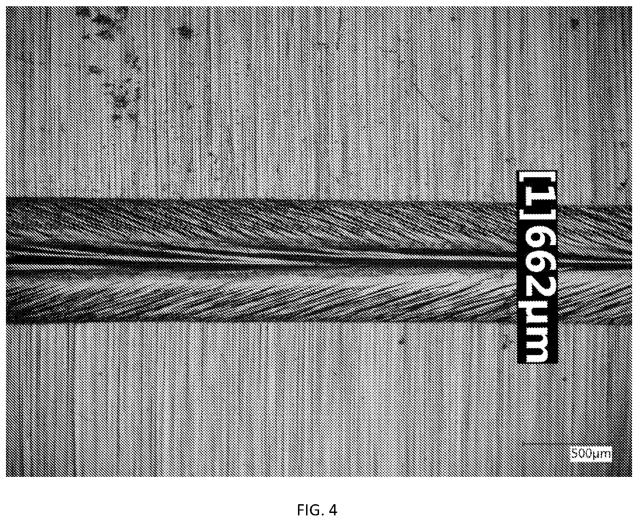

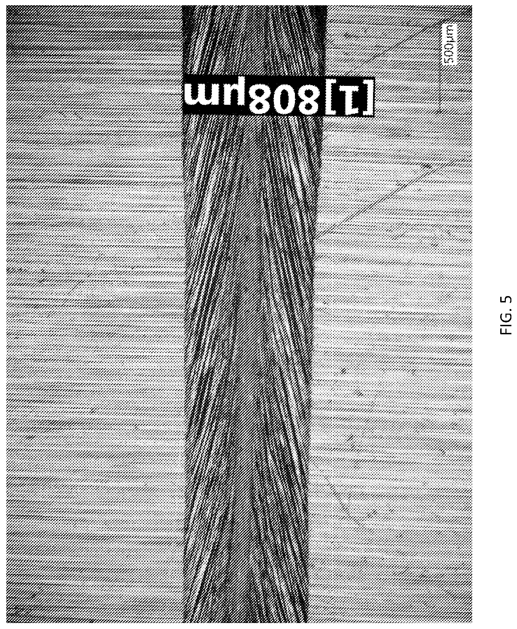

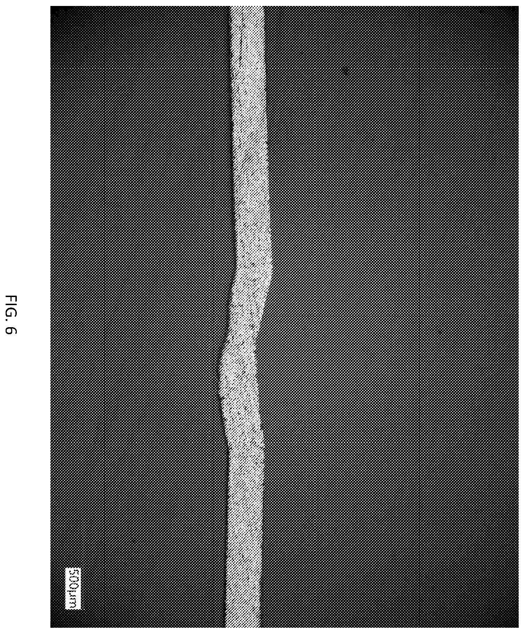

Turning to FIGS. 1 to 3 there are shown photographs of a butt weld of 200um to 200um aluminum sheets, utilizing 500W of laser power at 130mm/sec. The laser provided a laser beam having a laser center wavelength may be 450 nm +/- 10 nm with a bandwidth for the lasers of 10-20 nm. Argon process gas is utilized at 50cfh. No dwell time is needed, as laser power easily propagates into the weld seam, heats the material on both sides, generates a suitable melt pool to propagate along the seam between the materials. FIG. 4 depicts the top surface, a clean, uniform weld. Clearly observable are the melted regions on both sides of the weld, and a smooth region of melted and solidified metal joining them. FIG. 5 depicts the bottom surface. Here too, there are three parts the weld. Evenly spaced chevron patterns on both sides, and small, slightly rougher patch joining them. FIG. 6 depicts the cross section of the weld. The etchant does not reveal the crystal structure of the aluminum, however little to no visible difference is seen between welded areas and non-welded areas. A bending of the metals occurs as they are heated and pulled together by the weld process. Little to no HAZ exists. Little to no oxidation exists.

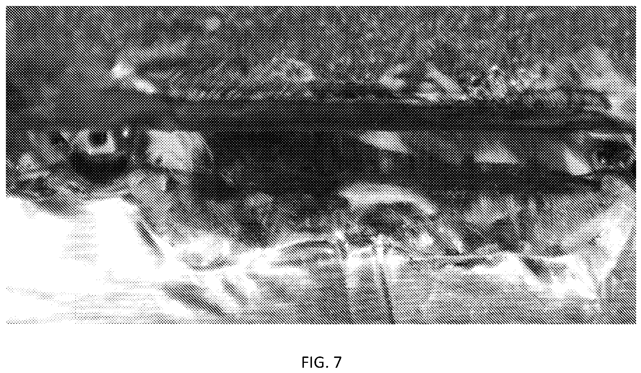

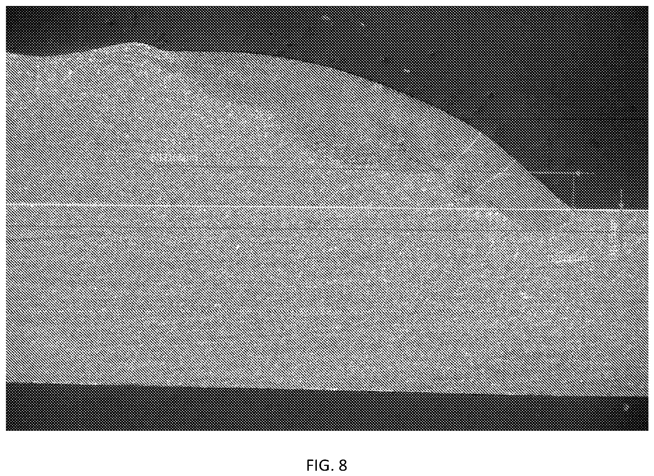

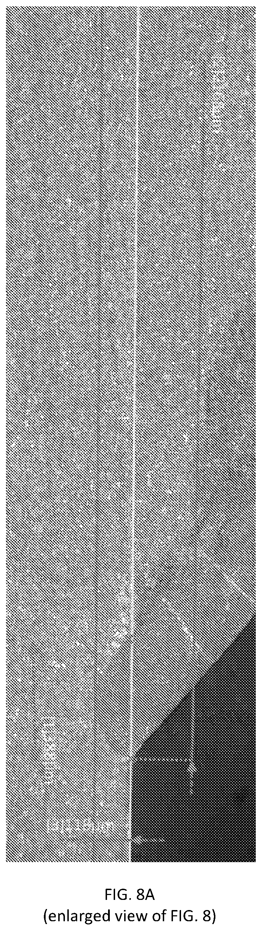

Turning to FIGS 7, 8 and 8a, there are shown photographs of laser welding Prismatic Cell and Pouch Cell battery leads using the present laser welding techniques. The laser provided a laser beam having a laser center wavelength may be 450 nm +/- 10 nm with a bandwidth for the lasers of 10-20 nm. FIG, 7, 8 and 8A show a weld of 41 layers of 12um aluminum to a 1mm aluminum tab. 1000W of power is utilized in a 3 pass process with speeds ranging from 800 to 2000mm/min. Initial dwells are utilized to first build up a large enough melt pool to fuse the foils to the tab during the first pass. In one embodiment, the laser is moved out of focus in order to spread laser heating to larger regions. The laser is moved along the edge of the foil, ether offset to the outside, center on, or offset inside of the foil edge. Subsequent passes typically step the laser beam further into/onto the foil stack. The focus position of the laser is adjusted accordingly to produce the most repeatable welds with the best characteristics. Typically, little to no oxidation is produced from this process.

Embodiments of the process include lap welding thick stacks of foils. Here a longer dwell may be used. Small circular or elliptical patterns can be used to penetrate the full stack thickness. Small back and forth motions can be used to maintain weld penetration. Small elliptical or other patterns can be utilized to maintain weld penetration. A thin piece of metal can be used to cover the foils to limit the amount of cutting of foil layers.

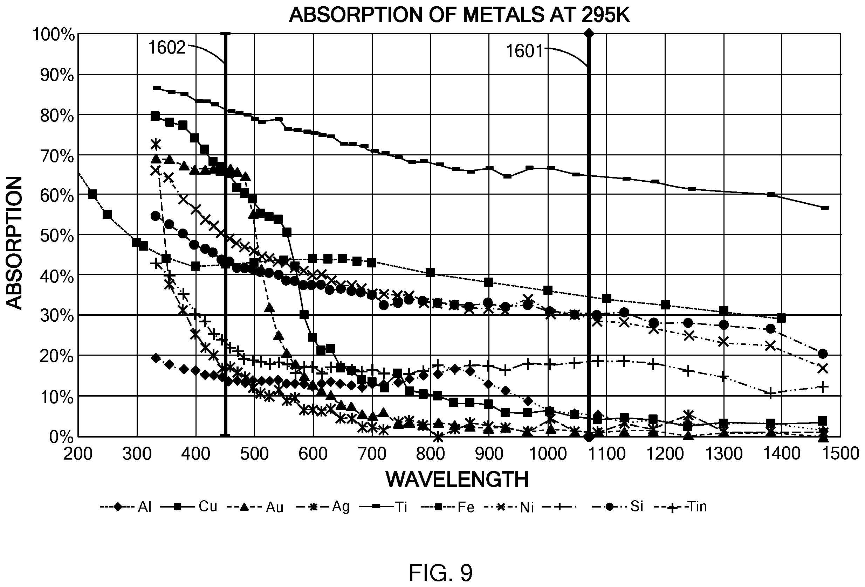

An embodiments of the present invention relates to methods, devices, and systems for the welding of aluminum to aluminum or aluminum to other materials, and combinations of these, using a visible laser system to achieve benefits including an efficient heat transfer rate to the aluminum material; a stable weld puddle; and having these benefits in particular in either the conduction mode or keyhole mode of welding. Aluminum is absorbent in the blue wavelength range (20%) as shown in FIG. 9. The present laser beam systems and methods heat the base material (the material to be welded, e.g., aluminum) faster than the heat can be conducted away from the laser spot. Once melting of the oxide layer is complete, melting of the base aluminum material begins and a stable melt pool is established. This provides for efficient, and good weld properties for conduction mode laser welding, i.e., the material in the laser beam is rapidly heated to the melting point and maintained at the melting point by the continuous laser beam resulting in a stable weld bead being formed. I

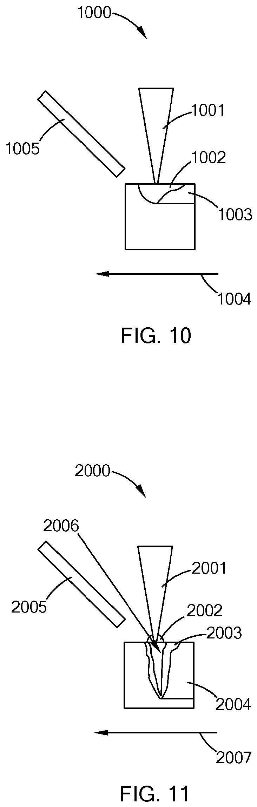

FIG. 10, shows a schematic of an embodiment of a conductive mode welding 1000, showing the direction of the weld with arrow 1004. The laser beam 1001, e.g., blue wavelength, is focused on to, and maintains a weld pool 1002. Behind the weld pool 1002 is a solid weld material 1003. The base material, e.g., aluminum metal or alloy, is below the weld. A shielding gas stream 1005 may also used.

Turning to FIG. 11, which shows a schematic of an embodiment of a keyhole mode weld 2000, showing the direction of the weld with arrow 2007. There is a metal/vapor plasma in the keyhole 2006. The blue laser beam 2002, creates a plasma cloud 2002, a weld pool 2003, and a solid weld metal 2004. A shielding gas stream 2005 may also used.

Comparing the keyhole weld of FIG. 11 with the conduction mode weld of FIG. 10, the walls of the final weld resolidification zone in the keyhole weld are more vertical through the part or base material than the conduction mode weld.

Preferably, the high power laser beams, (e.g., blue laser beams), for the embodiments of the present method are focused, or have the ability to be focused through the optics in the system, to a spot size of about 50 µm or more and have a power of at least 150 W or more, see claim 1 for the ranges. The powers for the blue laser beams may be 200 - 500 W, 150 - 1,000 W, 1,000 W, 500 W - 1,500 W, 1,500 W, and all wavelengths within these ranges. The spot sizes (longest cross sectional distance, which for a circle is the diameter) for these powers and laser beams is from about 50 *µ*m to about 250 µm, and all sized within this range. The power density of the laser beam spots is greater than about 1000 kW/cm², greater than about 2000 kW/cm², and all power densities within these ranges, see claim 1 also for the range. Welding speeds of from about 0.1 mm/sec to about 200 mm/sec for alumimum, and slower and faster speeds depending upon various conditions, and all speeds within these ranges, can be used to weld with the production of little to no aluminum dust as describe in this specification.

Embodiments can use one, two, three or more laser beams to form the welds. The laser beams can be focused on the same general area to initiate the weld. The laser beam spots can be overlapping, and can be coincident. The plurality of laser beams can be used simultaneously; and coincident and simultaneous. A single laser beam can be used to initiate the weld followed by addition of the second laser beam. A plurality of laser beams can be used to initiate the weld followed by using less beams, e.g., a single beam, to continue the weld. The laser beams in this plurality of laser beams can be different powers or the same powers, the power densities can be different or the same, the wavelengths can be different or the same, and combinations and variations of these. The use of additional laser beams can be a simultaneous, or sequentially. Combinations and variations of these embodiments of using multiple laser beams may also be used. The use of multiple laser beams can suppress spatter from the weld, and can do so in deep penetration welding methods.

In embodiments hydrogen gas, H₂, can be mixed with an inert gas to remove oxide layers from the base material during the welding process. The hydrogen gas is flowed over the weld area. The hydrogen gas also promotes wetting of the weld. The hydrogen gas can be added to, or form a mixture with, the shielding gas and be applied to the weld as a part of the shielding gas. These mixtures would include for example, Ar-H₂, He-H₂, N₂-H₂,

### Methods for conduction mode welding of aluminum, aluminum alloys and other metals with a blue laser system

The present systems overcome the problems and difficulties associated with IR welding's production of hazardous materials, including hazardous aluminum dust. The present laser beam's interaction with aluminum allows the aluminum to reach its melt point and allow an acceptable processing window.

In an embodiment a steady conduction mode weld, is performed and high-quality welds are obtained at a steady and rapid rate, through the use of a part holding devices or fixture.

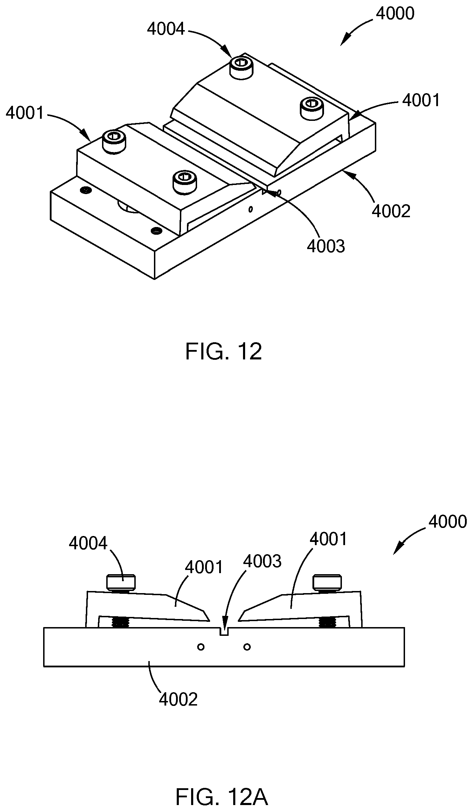

A welding fixture is used to hold the material to be welded in place during the thermal transient induced in the parts by the laser beam. The fixture in FIGS. 12 and 12A, which are a prospective and cross-sectional view respectively, of an embodiment of a linear section of a welding clamp that can be used for lap, butt and even edge welds. The welding fixture 4000 has a base plate or support structure 4003. Attached to the baseplate 4003 are two clamp members, or hold downs, 4001. The hold downs 4001 have a tab that rests on the surface of the baseplate 4002, and a free end that contacts and holds the work piece(s) to be welded. There is a slot, e.g., 2 mm wide x 2 mm deep, in the baseplate 4002 in the area between the free ends for the hold downs 4001. Four bolts, e.g., 4004, (other types of adjusting tightening devices may also be used) adjust, tighten and hold the clamps against the work piece, thus holding or fixing the work piece.

The preferred material for this fixture is a low thermal conductivity material such as stainless steel because it is sufficiently stiff to apply the clamping pressure required to hold the parts in place during the weld. In embodiments the clamps, the baseplate and both can have insulating qualities or effects on the work piece during the welding process. The use of a material having low thermal conductivity for the fixture prevents, minimizes and reduces the heat that is deposited into the part form being rapidly conducted away by the fixture itself. The material selected for the clamp, the width of the clamp and the gap under the parts are all parameters which determines the depth of penetration of the weld, the width of the weld bead and the overall quality of the weld bead.

In a preferred embodiment, the baseplate 4002 of the fixture 4000 is constructed of stainless steel, a 2 mm wide gap 4003 is cut into the baseplate to be positioned just below the weld zone and flooded with an inert gas such as Argon, Helium, or Nitrogen (as a covering or shielding gas) to minimize oxidization of the back surface of the weld. The covering gas can be a mixture of hydrogen and an inert gas. The clamps 4001 are designed to put pressure on the parts to be welded at 2 mm from the edges of the gap 4003 in the baseplate 4002. Thus, in this embodiment a 6 mm wide area of the parts to be welded is open to the laser beam (recognizing that the laser beam will be a slight distance away from the clamp). This positioning of the clamps allows the laser beam easy access to the surface as well as a tight clamping of the parts. This type of clamp is the preferred method for butt welding two foils or sheets of aluminum together varying in thickness from 50 *µ*m to multiple mm. This fixture is also suited to lap welding two thicker aluminum plates together ranging from 200 *µ*m to multiple mm. The amount of clamping pressure is very important, and depending on the amount of laser power, the speed of the weld, the thickness of the parts and the type of weld being performed the clamping bolts may be torqued to 0.05 Newton-m (Nm), up to 3 Nm, or more for thicker materials. This torque value is highly dependent on the bolt size, the thread engagement and the distance from the bolt center to the clamping point.

In an embodiment high quality and excellent welds are obtained by providing sufficient clamping force to prevent movement of the parts during the weld while minimizing the parasitic heat loss to the fixture itself. It should be understood that the embodiment of the fixture in FIGS. 12 and 12A, represents a cross section of a straight portion of a weld fixture and may be designed into any arbitrary 2-D path (e.g., - S - , -C -. -W - etc.) for welding any types of shapes together. In another embodiment, the fixture may be preheated, or heated during the welding process to increase the speed or depth of penetration of the weld while reducing the parasitic heat losses to the fixture. The fixture when heated to a few 100 °C can improve the weld speed, or depth of penetration and quality by a factor or two or more. The shielding gas for the top side of the weld is delivered longitudinally from the front of the weld travel direction to the back of the weld travel direction as shown in FIG. 10.

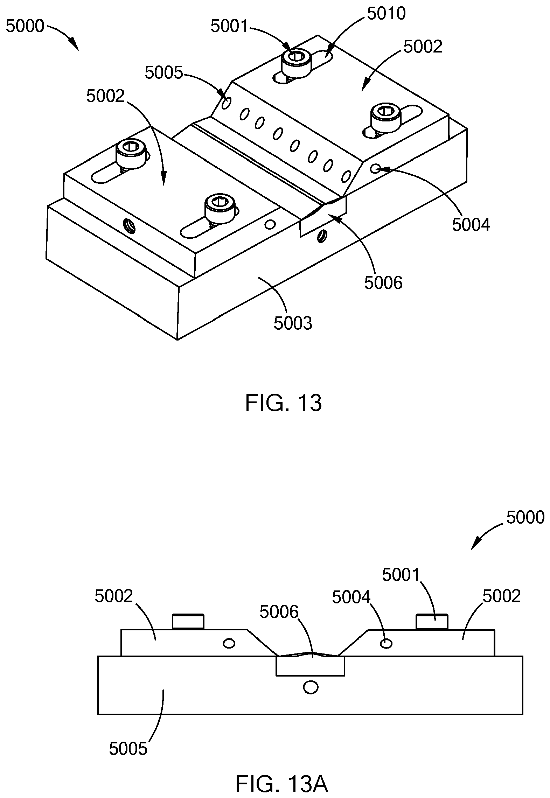

Lap welding two parts using the conduction mode welding process requires the parts to be placed and held in intimate contact. The two parts (collectively the work piece) can be placed in a fixing device, preferably of the type shown in FIGS. 13 and 13A, which are perspective and cross-sectional view respectively of fixture 5000. The fixture 5000 has a baseplate 5003 and two clamps 5002. The clamps have four slots, e.g., 5010 that correspond to hold down bolts, e.g., 5001. In this manner the position of the clamps relative to the work piece, relative to each other can be adjusted and fixed, as well as the amount of clamping force or pressure. The clamps can have magnets to assist in their positioning, and fixation. The clamps 5002 have internal channels, e.g., 5004 for transporting shielding gas. The channels 5004 are in fluid communication with shielding gas outlets, e.g., 5005. The shielding gas outlets and the shielding gas channels from a shielding gas delivery system within the clamps. Thus, the gas delivery system is, and is through, a row of holes along the length of the clamp that deliver an inert gas such as Argon, Helium, or Nitrogen. Argon is the preferred gas because it is heavier than air and will settle on the part, displacing the oxygen and preventing oxidation of the upper surface. A small amount of Hydrogen can be added to the inert gas to promote scavenging of the oxide layer on the part and promote the wetting of the parts during the melting process.

There is also an insert 5006, which is used to force the individual foils in a stack of foils to keep and maintain contact with each other in the stack. The insert 5006 can stretch and force the foils into tight, and uniform contact with each other. In the embodiment of FIGS. 13 and 13A, the insert 5006 is an inverted V shape. It can be curved, humped or other shaped depending upon the stack of foils, and their individual thicknesses. Additionally, in the embodiment of FIGS. 13 and 13A the insert 5006 is adjacent to, but not covered by the clamps 5002. The insert can be removed from the ends of the clamps, or one or both of the clamps may partially cover the insert.

In the preferred embodiment, the baseplate 5000 is made from stainless steel, as are the clamps 5002. The fixation device can be made from a ceramic or thermally insulating material. The hump 5006 provides pressure from the bottom of the weld to keep the overlapping plates (two, three, tens, etc.) in intimate contact. In this embodiment, a provision for shielding gas is built into the clamps (2) in the form of a row of holes along the length of the clamp that deliver an inert gas such as Argon, Helium, or Nitrogen. Argon is the preferred gas because it is heavier than air and will settle on the part, displacing the oxygen and preventing oxidation of the upper surface. The insert hump 5006 in the baseplate 5003 may also have a series of channels, holes or slots, to deliver a cover or shielding gas to the backside of the weld to prevent oxidation. The fixture 5000, as shown in the figures, represents a cross section of a straight portion of a weld and may be designed into any arbitrary 2-D path for welding arbitrary shapes together. In this application, the torque values for the bolts can be important, depending upon the nature of the work piece, too low of a torque value, e.g., 0.1 Nm, and the parts may not remain in contact, too high of a torque value >1 Nm and the parasitic heat transfer reduces the efficiency of the welding process, reducing penetration and weld bead width.

Other processing parameter that individually and collectively can further reduce and eliminate spatter and dust formation, include providing adequate assist gas to the parts, locating focus position within the part, using conduction mode welding, and using weld pulse parameters or shaping of the weld (similar to wobbling in circular, raster pattern).

### Further techniques for welding of aluminum, aluminum alloys and other metals with reduced production of hazardous metal powders

It should be understood that at 500 Watts and a 200 *µ*m spot, the power density is >1.6 MW/cm². At this power density, and greater, even the blue laser has the potential to create spatter and porosity in the weld. However, since the absorption is well controlled, the ability to suppress, control or eliminate, the spatter is possible. The first method for suppressing the spatter is to reduce the power level once the spatter process begins, while holding the welding speed constant. The second method for suppressing the spatter is to elongate the weld puddle to allow the shielding gases and vaporized metal to exhaust from the keyhole, producing a spatter free, defect free weld. The third method for suppressing the spatter is to wobble the blue laser beam using either a set of mirrors mounted on a set of galvanometer motors or a robot. The fourth method for suppressing the spatter is to reduce the pressure of the welding environment including the use of a vacuum. Finally, the fifth method for suppressing the spatter is to modulate the laser beam power over a range of 1 Hz to 1 kHz, or as high as 50 kHz. Preferably, the welding parameters are optimized to minimize the spatter during the process.

In general, embodiments of the present invention relate to laser processing of materials, laser processing by matching preselected laser beam wavelengths to the material to be processed to have high or increased levels of absorptivity by the materials, and in particular laser welding of materials with laser beams having high absorptivity by the materials.

A case relates to using laser beams having visible laser beams, wavelengths from 350 nm to 850 nm, to weld or otherwise join through laser processing, materials that have higher absorptivity for these wavelengths. In particular laser beam wavelengths are predetermined based upon the materials to be laser processed to have absorption of at least about 10%, at least about 15%, at least about 18% and at least about 20%, or more, and from about 10% to about 20%. Thus, for example, laser beams having wavelengths from about 400 nm to about 500 nm are used to weld gold, copper, brass, silver, aluminum, nickel, alloys of these metals, stainless steel, and other metals, materials, and alloys.

The use of a blue laser, e.g., about 405 to about 495 nm wavelength, to weld materials such as gold, copper, brass, nickel, nickel plated copper, stainless steel, and other, materials, plated materials and alloys, is preferred because of the high absorptivity of the materials at room temperature, e.g., absorptivities of greater than about 15%. One of several advantages of the present inventions is the ability of a preselected wavelength laser beam, such as the blue laser beam, that is better able to better couple the laser energy into the material during the laser operation, e.g., the welding process. By better coupling the laser energy to the material being welded, the chance of a run away process is greatly reduced and preferably eliminated. Better coupling of the laser energy also allows for a lower power laser to be used, which provides cost savings. Better coupling also provides for greater control, higher tolerances and thus greater reproducibility of welds. These features, which are not found in with IR lasers and IR laser welding operations, are important, to among other products, products in the electronics and power storage fields.

The use of a laser, e.g., about 380 to about 575 nm wavelength, to weld materials such as gold, copper, brass, nickel, nickel plated copper, stainless steel, and other, materials, plated materials and alloys, is preferred because of the high absorptivity of the materials at room temperature, e.g., absorptivities of greater than about 15%. One of several advantages of the present inventions is the ability of a preselected wavelength laser beam, such as the blue laser beam, that is better able to better couple the laser energy into the material during the laser operation, e.g., the welding process. By better coupling the laser energy to the material being welded, the chance of a run away process is greatly reduced and preferably eliminated. Better coupling of the laser energy also allows for a lower power laser to be used, which provides cost savings. Better coupling also provides for greater control, higher tolerances and thus greater reproducibility of welds. These features, which are not found in with IR lasers and IR laser welding operations, are important, to among other products, products in the electronics and power storage fields.

In an embodiment a blue laser that operates in a CW mode is used. CW operation can be preferred over pulsed lasers, in many applications, because of the ability to rapidly and fully modulate the laser output and control the welding process in a feedback loop, resulting in a highly repeatable process with optimum mechanical and electrical characteristics.

An embodiment of the present invention involves the laser processing of one, two or more components. The components may be made from any type of material that absorbs the laser beam, e.g., the laser beams energy, plastics, metals, composites, amorphous materials, and other types of materials. In an embodiment the laser processing involves the soldering together of two metal components. In an embodiment the laser processing involves the welding together of two metal components.

In an embodiment there is provided the tools, systems and methods wherein the laser welding operation is selected from the group consisting autogenous welding, laser-hybrid welding, keyhole welding, lap welding, filet welding, butt welding and non-autogenous welding.

Laser welding techniques may be useful in many varied situations, and in particular where welding is needed for forming electrical connections, and in particular power storage devices, such as batteries. Generally, embodiments of the present laser welding operations and systems include visible wavelength, and preferably blue wavelength, lasers that can be autogenous which means only the base material is used and is common in keyhole welding, conduction welding, lap welding, filet welding and butt welding. Laser welding can be non-autogenous where a filler material is added to the melt puddle to "fill" the gap or to create a raised bead for strength in the weld. Laser welding techniques would also include laser material deposition ("LMD").

Embodiments of the present laser welding operations and systems include blue wavelength, lasers that can be hybrid welding where electrical current is used in conjunction with a laser beam to provide more rapid feed of filler material. Laser Hybrid welding is by definition non-autogenous.

Preferably, in some embodiments active weld monitors, e.g., cameras, can be used to check the quality of the weld on the fly. These monitors can include for example x-ray inspection and ultrasonic inspection systems. Furthermore, on stream beam analysis and power monitoring can be utilized to have full understanding of system characteristics and the operations characterizations.

Embodiments of the present laser systems can be a hybrid system that combine the novel laser systems and methods with conventional milling and machining equipment. In this manner material can be added and removed during the manufacturing, building, refinishing or other process. Examples of such hybrid systems, using other embodiments of laser systems, which have been invented by one or more of the present inventors, is disclosed and taught in US Patent Application Serial No. 14/837,782, the entire disclosure of which is incorporated herein by reference.

Typically, in embodiments, laser welding uses a very low flow of gas to keep the optics clean, an air knife to keep the optics clean or an inert environment to keep the optics clean. Laser welding can be performed in air, an inert environment, or other controlled environment, e.g., N₂.

There are two preferred autogenous welding modes, and autogenous welds that they produce, that are performed with embodiments of the present laser systems and processes, a conduction weld and a keyhole weld. The conduction weld is when a laser beam with a low intensity (< 100 kW/cm²) is used to weld two pieces of metal together. Here the two pieces of metal may be butted up to each other, overlapping to one side and completely overlapping. The conduction weld tends not to penetrate as deeply as a keyhole weld and it generally produces a characteristic "spherical" shape weld joint for a butt weld, which is very strong. However, a keyhole weld occurs with a relatively high laser beam intensity (> 500 kW/cm²) and this weld can penetrate deep into the material and often through multiple layers of materials when they are overlapped. The exact threshold for the transition from conduction mode to key-hole mode has not yet been determined for a blue laser source, but the key-hole weld has a characteristic "v" shape at the top of the material with a near parallel channel of refrozen material penetrating deep into the material. The key-hole process relies on the reflection of the laser beam from the sides of the molten pool of metal to transmit the laser energy deep into the material. While these types of welds can be performed with any laser, it is expected that the blue laser will have a substantially lower threshold for initiating both of these types of welds than an infrared laser.

The following examples are provided to illustrate various embodiments of the present laser systems and operations with a blue laser system for welding components, including components in electronic storage devices. These examples are for illustrative purposes, may be prophetic, and should not be viewed as, and do not otherwise limit the scope of the present inventions.

### EXAMPLE 1

Laser welds of metals using blue, blue green, green or red laser beams are conducted without wobbling the beam. These welds have deep penetration. Thus, there is provided wobble free welding of aluminum based materials, including aluminum foils, and aluminum plates, using these laser beams. There is provided wobble free welding on aluminum, aluminum based materials, and alloys of these.

In an embodiment of this wobble free laser welding, laser welding is conducted on aluminum having thicknesses of 2 mm or less, about 1 mm or less and less than 1 mm and with a blue laser beam having a wavelength of 450 nm.

In an embodiment of this wobble free laser welding, laser welding is conducted on aluminum having a thickness of less than 1 mm and with a blue laser beam having a wavelength of 460 nm.

In an embodiment of this wobble free laser welding, laser welding is conducted on aluminum having a thickness of less than 1 mm and with a blue laser beam having a wavelength of 470 nm.

In an embodiment of this wobble free laser welding, laser welding is conducted on aluminum having a thickness of less than 1 mm and with a green laser beam having a wavelength of 515 nm.

In an embodiment of this wobble free laser welding, laser welding is conducted on aluminum having a thickness of less than 1 mm and with a green laser beam having a wavelength of 532 nm.

In an embodiment of this wobble free laser welding, laser welding is conducted on aluminum having a thickness of less than 1 mm and with a green laser beam having a wavelength of 550 nm.

### EXAMPLE 1A

Laser welds of metals using blue, blue green, green or red laser beams are conducted without wobbling the beam. These welds have deep penetration. Thus, there is provided welding of aluminum based materials, including aluminum foils, and aluminum plates, using these laser beams, using a wobbling of the beam. There is provided wobble free welding on aluminum, aluminum based materials, and alloys of these.

In an embodiment of this laser welding, laser welding is conducted on aluminum having thicknesses of 2 mm or less, about 1 mm or less and less than 1 mm and with a blue laser beam having a wavelength of 450 nm.

In an embodiment of this laser welding, laser welding is conducted on aluminum having a thickness of less than 1 mm and with a blue laser beam having a wavelength of 460 nm.

In an embodiment of this laser welding, laser welding is conducted on aluminum having a thickness of less than 1 mm and with a blue laser beam having a wavelength of 470 nm.

In an embodiment (not covered by the present invention) this laser welding, laser welding is conducted on aluminum having a thickness of less than 1 mm and with a green laser beam having a wavelength of 515 nm.

In an embodiment (not covered by the present invention) of this laser welding, laser welding is conducted on aluminum having a thickness of less than 1 mm and with a green laser beam having a wavelength of 532 nm.

In an embodiment (not covered by the present invention) of this wobble free laser welding, laser welding is conducted on aluminum having a thickness of less than 1 mm and with a green laser beam having a wavelength of 550 nm.

### EXAMPLE 2

An embodiment a 600-Watt laser having four 200-Watt blue laser modules providing a laser beam having a wavelength of 450 nm. This laser system is taught and disclosed in US patent application serial number 16/730,852 (Attorney docket number Nu 18a).
The lasers diodes are individually collimated, and the beam divergence is circularized resulting in a beam parameter product of 22 mm mrad for each module. The laser beams from the four blue laser modules are optically sheared in both the horizontal, as well as the vertical direction, to fill out the aperture of the 100 mm diameter focusing optic. This composite beam (450 nm) has a beam parameter product of 44 mm mrad. This blue laser beam is delivered via free space to the work piece. It is noted that the beam may also be delivered via a fiber.

An optical breadboard is used having a 4' x 6' optical bench which allows the integration of real time beam diagnostics into the setup. The composite output beam is sampled with a 1% beam sampler and a portion of the beam is sent to a far-field profile camera and a power meter. The far-field is generated with the same focal length lens as the welding lens, either a 100 mm F/1 lens or a 200 mm F/2 lens. Both lenses are BK7 aspheres from ThorLabs. The lenses are underfilled to about 80 mm, and the spot at the workpiece is approximately 200 *µ*m for the 100 mm FL lens, and approximately 400 *µ*m for the 200 mm FL lens.

The beam caustic is measured by translating the Ophir beam profiler through the focus of the 100 mm FL lens in the beam sampling arm of the setup and measuring the diameter of the beam at the 95% encircled power point. This measurement demonstrates the relatively short depth of focus for the 100 mm FL lens.

A Fanuc 6 -axis robot (FANUC M-16iB) is used to move the sample through the free space beam focus with the cover gas being provided by a 3/8" diameter sparger tube mounted on the robot adapter and directed along the direction of the weld.

An embodiment of a welding fixture of the type shown in FIGS 12 and 12A is used. The welding fixture is a part of the welding process and when welding high thermal conductivity materials, it can affect the penetration depth, weld speeds, and both, that can be achieved. FIGS. 12 and 12A are drawings of the embodiment of the welding fixture. In one embodiment aluminum (6061 series) is used. In another embodiment stainless steel (316) is used. The aluminum welding fixture tends to take the heat out of the part rapidly, while the stainless-steel fixture allows most of the heat to stay within the part. Both materials are evaluated along with different methods for clamping the samples (e.g., work piece, part). An inert gas such as Argon - CO₂ is flowed over the top of the part placed in the fixture to suppress any oxidation of the parts during the welding process. A small gap 4003 is located under the center of the sample to minimize the heat sinking at the point of the bead on plate Examples and allow an assist gas to be added to the back side of the weld.

In the keyhole mode of welding can produce a strong plume when welding. Since the atoms and ions in the plume readily absorb the 450 *µ*m light, this plume should be managed and preferably suppressed. A 3/8" diameter tube sparger is used to suppress the plume by delivering 50 scfh of Argon or Argon-CO₂ across the top of the part. Welds can be conducted or made with various gasses to manage the plume and avoid oxidation of the parts, including Argon, Argon-CO₂, Air, Helium and Nitrogen. The goals of optimizing welding processes, among others, is to achieve the greatest penetration at the highest possible speed. The data presented in Examples 8A to 8K use Argon as the cover gas. In other laser welding and processing applications, such as butt welding, plume management is desirable, and preferred.

For the 500 Watts welding tests of Examples 8A to 8F, a 200 mm focal length lens is used to focus the beam to a 400 *µ*m spot size resulting in an average intensity of ~400 kW/cm² and a peak intensity approaching 800 kW/cm².

For the 600 Watts welding tests of Examples 8G to 8K, a 100 mm focal length lens is used to focus the beam to a 200 *µ*m spot size resulting in an average intensity of approximately 2.1 MW/cm² and the peak intensity approaches 4.5 MW/cm².

Using this laser, processes, bead on plate welding is conducted and evaluated with aluminum (1100 series) using 500 Watts, a spot size of 400 *µ*m and an average power density of 400 kW/cm². The samples are all cut to 10 mm x 45 mm in size with a shear and cleaned with acetone prior to processing. The surface finish is as supplied from McMaster Carr, which looks like a rolled finish for the thinner samples and a milled finish for the thicker samples.

The samples for welding are wiped down with acetone prior to the evaluation and clamped in the fixture with the bolts torqued to 1 Newton-meter. The fixture and sample were held at a 20-degree angle to the beam normal to prevent back reflections into the laser, causing an elongation of the spot to 400 *µ*m x 540 *µ*m for the 200 mm FL lens. The beam angle is from the beam normal to the trailing side of the part to be welded. This tilt of the sample most likely reduces the maximum welding speeds that can be achieved due to the lower intensity on the part. The sequence of the weld is the robot is commanded to translate the part, with enough distance between the part and the laser beam to insure the robot has reached the programmed speed, the laser is initiated just as the weld fixture crosses the position of the laser beam. The part is translated through the beam at a constant velocity, once the end of the weld fixture is reached, the laser beam is turned off and the robot is commanded to return to its home position. The samples are cross sectioned, polished and etched to reveal the microstructure. All the welds exhibited a spherical melt-freeze pattern indicative of a conduction mode weld.

### EXAMPLE 2A

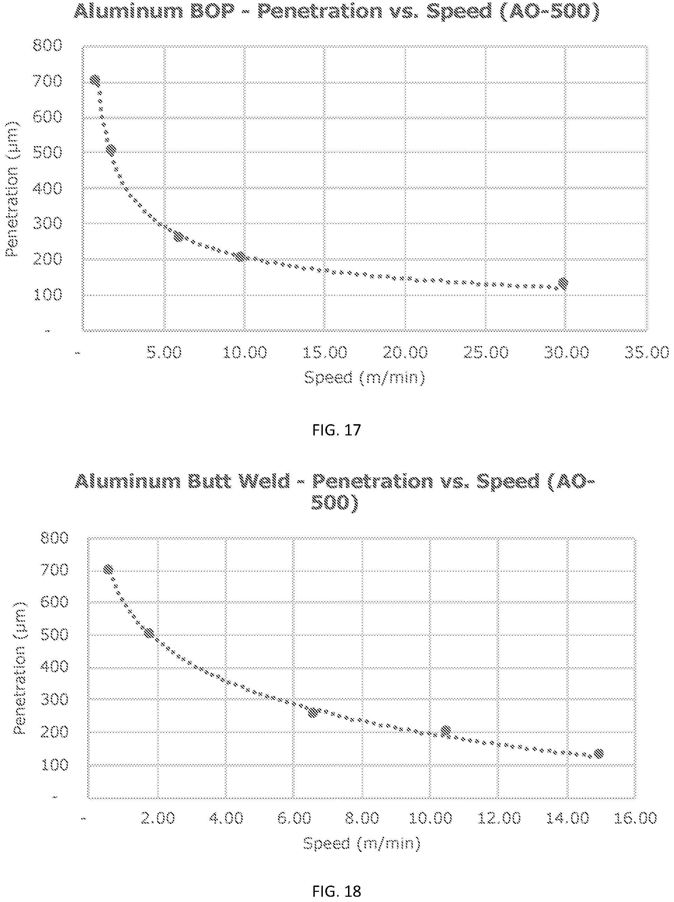

Using the laser, processes, and set up of Examples 2, aluminum 1100 series samples are welded and evaluated. Aluminum 1100 series samples were prepared and mounted in the weld fixture the same as the aluminum parts in Example 2. The weld process is similar to the cooper welding process, of Example 2, with only the robot speed being changed. The weld speed shown in FIG. 17 is for the case where a full penetration bead is observed on the backside of the part of that thickness. There is no spatter from the melt puddle observed during the welding process.

### EXAMPLE 2B

Using the laser, processes, and set up of Examples 2, butt welds and welding tests are performed for two Aluminum 1100 samples placed side by side in the welding fixture. The samples are prepared with a shear, and the two edges had no special preparation prior to the weld being performed. The samples are wiped down with acetone prior to the weld. The final weld speed plotted, is the speed at which a full penetration bead is obtained over the entire length of the samples being welded. A summary of this data is shown in FIG. 18.

### EXAMPLE 3

The welding processes of Examples 1, 1A, 2, 2A and 2B, produce minimal, and preferably no aluminum based powder. In an embodiment, the forgoing amounts of aluminum based powders are not produced as airborne aluminum powders or airborne aluminum particles.

### EXAMPLE 4

During the welding processes of Examples 1, 1A, 2, 2A and 2B, there is produced less than 50g., less than 20 g, less than less than 10 g, less than 1 g, less than 100 mg, less than 50 mg, less than 5 mg, less than about 1 mg, less than 1 mg, less than about 0.5 mg, less than 0.5 mg, less than about 0.1 mg, less than 0.1 mg, less than 0.05 mg, less than 0.01 mg, from about 20 g to about 1 mg, from about 2 g to about 1 mg, from about 2 mg to about 0.05 mg, from about 1 mg to about 0.001 mg, and lessor amounts of aluminum based powders, including aluminum, aluminum oxide and aluminum hydroxide. In an embodiment, the forgoing amounts of aluminum based powders are produced as airborne aluminum powders or airborne aluminum particles.

### EXAMPLE 5

During the formation of 1 mm length of weld for the welding processes of Examples 1, 1A, 2, 2A and 2B, there is produced less than 50 g, less than 20 g, less than 10 g, less than 1 g, less than 100 mg, less than 50 mg, less than 5 mg, less than about 1 mg, less than 1 mg, less than about 0.5 mg, less than 0.5 mg, less than about 0.1 mg, less than 0.1 mg, less than 0.05 mg, less than 0.01 mg, from about 20 g to about 1 mg, from about 2 g to about 1 mg, from about 2 mg to about 0.05 mg, from about 1 mg to about 0.001 mg, and lessor amounts of aluminum based powders, including aluminum, aluminum oxide and aluminum hydroxide. In an embodiment, the forgoing amounts of aluminum based powders are produced as airborne aluminum powders or airborne aluminum particles.

### EXAMPLE 6

During the at least 10 seconds, from 10 to 1,000 second, and for more than 1,000 second, more than 10,000 second, and the entirely of the welding operations of weld for the welding processes of Examples 1, 1A, 2, 2A and 2B, there is produced less than 50 g, less than 20 g, less than 10 g, less than 1 g, less than 100 mg, less than 50 mg, less than 5 mg, less than about 1 mg, less than 1 mg, less than about 0.5 mg, less than 0.5 mg, less than about 0.1 mg, less than 0.1 mg, less than 0.05 mg, less than 0.01 mg, from about 20 g to about 1 mg, from about 2 g to about 1 mg, from about 2 mg to about 0.05 mg, from about 1 mg to about 0.001 mg, and lessor amounts of aluminum based powders, including aluminum, aluminum oxide and aluminum hydroxide. In an embodiment, the forgoing amounts of aluminum based powders are produced as airborne aluminum powders or airborne aluminum particles.

### EXAMPLE 7

The welding processes of Examples 1, 1A, 2, 2A and 2B, produce minimal, and preferably no aluminum based powder having a particle size that is smaller than 500 microns. In an embodiment, amounts of aluminum based powders are not produced as airborne aluminum powders or airborne aluminum particles.

### EXAMPLE 8

The welding processes of Examples 1, 1A, 2, 2A and 2B, produce minimal, and preferably no aluminum based powder having a particle size that is smaller than about 420 microns, and preferably smaller than 420 microns. In an embodiment, amounts of aluminum based powders are not produced as airborne aluminum powders or airborne aluminum particles.

### EXAMPLE 9 (not covered by the present invention)

A heavy duty welding system for welding larger and heavier aluminum parts, such as automotive frames, ship parts, frames, struts, beam, structural supports, machine parts, etc., is provided. The laser system has a laser having a wavelength from 380 m to 850 nm, and preferably 405 nm to 600 nm, having a power from 500 W to 5 kW, more than 4 kW, more than 5 kW, from 2 kW to 10 kW, and from 1 kW to 5 kW.

### EXAMPLE 10 (not covered by the present invention)

In the making, manufacturing and assembly of aluminum bases components, including aluminum based parts, operations, such as grinding, milling, machining and assembling, may cause the production unacceptable, undesirable, hazardous and even explosive aluminum dust conditions. Air handling systems, and the area near where the dust is generated, transported or present, can be subjected to laser beams having a wavelength from 380 nm to 850 nm, and preferably 405 nm to 600 nm, where the laser beam is provided in a pattern and energy so that the aluminum dust is soften, melted or both to enable the smaller dust particles to agglomerate to a larger sized agglomerations or particles, where they are no longer flammable or explosive, e.g., agglomerations or particles having a particle size of greater than 420 microns, 500 microns and greater, 600 microns and greater, 1,000 microns and greater. In an embodiment the laser energy is sufficiently high that the small particles are vaporized, preferably in an oxygen free environment, the vapor is deposited as aluminum mental of a surface, e.g., a collection plate.

### HEADINGS AND EMBODIMENTS

It should be understood that the use of headings in this specification is for the purpose of clarity, and is not limiting in any way. Thus, the processes and disclosures described under a heading should be read in context with the entirely of this specification, including the various examples. The use of headings in this specification should not limit the scope of protection afford the scope of the present invention as defined in the appended claims.

## Claims

1. A method of forming a weld in aluminum based materials, the method comprising:
a. placing a work piece in a laser system; wherein the work piece comprises placing a first piece of aluminum based material in contact with a second piece of aluminum material;
b. directing a blue laser beam at the work piece, whereby a weld is formed between the first piece of aluminum based material and the second piece of aluminum based material; wherein the weld comprises a HAZ and a resolidification zone; and,
the method being **characterised by**:
c. wherein the laser beam has a power in the range of 150 W to about 1,500 W, and preferably in the range of about 200 W to about 750 W;
d. wherein the laser beam is directed to the work piece as a focused spot having spot size of from about 50 µm to about 250 µm;
e. wherein the laser beam is directed to the work piece as a focused spot having power density of greater than 100 kW/cm², preferably from about 100 kW/cm² to about 5 MW/cm², and more preferably from about 100 kW/cm² to about 800 kW/cm²;
so that a range of hardness for the HAZ is within a range of hardness for the aluminium based material, and that the laser welding of the aluminum based materials is achieved with little to no aluminum dust.

2. The method of claim 1, wherein the range of hardness for the resolidification zone is within a range of hardness for the aluminum based material.

3. The method of claim 1, wherein a microstructure of the aluminum based material, the HAZ and the resolidification zone are identical.

4. The method of claim 1, wherein a microstructure of the aluminum based material, the HAZ and the resolidification zone are identical; and, wherein the identical microstructure comprises crystal growth regions of similar size.

5. The method of claim 15, wherein the laser beam is directed to the work piece as a focused spot having power density of less than 2000 kW/cm².and preferably of greater than 100 kW/cm².

6. The methods of any of claims 1 to 5, wherein aluminum dust having a particle size of less than 500 microns, preferably of less about 420 microns is not formed.

7. The methods of any of claims 1 to 5, wherein there is produced an amount of airborne aluminum dust that is below explosive levels.

8. The methods of any of claims 1 to 6, wherein there is produced a low amount of airborne aluminum dust, wherein the amount is selected from the group consisting of less than 100 g, less than 50 g, less than 20 g, less than 1 g, less than 100 mg, less than 50 mg, less than 5 mg, and less than 1 mg, less than 0.1 mg, less than 0.001 mg, from about 50 g to about 1 g, from about 1 g to about 50 mg, from about 70 mg to 20 mg, and from about 1 mg to about 0.1 mg.

9. The methods of any of claims 6 to 8, wherein the aluminum dust comprises one or more of aluminum, aluminum oxide and aluminum hydroxide.

## Patentansprüche

1. Verfahren zum Herstellen einer Schweißverbindung in aluminiumbasierten Materialien, wobei das Verfahren umfasst:
a. Platzieren eines Werkstücks in einem Lasersystem; wobei das Werkstück ein Platzieren eines ersten aluminiumbasierten Stücks Material in Kontakt mit einem zweiten Stück Aluminiummaterial umfasst;
b. Ausrichten eines blauen Laserstrahls auf das Werkstück, wodurch eine Schweißverbindung zwischen dem ersten aluminiumbasierten Stück Material und dem zweiten aluminiumbasierten Stück Material gebildet wird; wobei die Schweißverbindung eine Wärmeeinflusszone (HAZ) und eine Wiederverfestigungszone umfasst; und,
wobei das Verfahren **gekennzeichnet ist durch**:
c. wobei der Laserstrahl eine Leistung im Bereich von 150 W bis etwa 1.500 W und vorzugsweise im Bereich von etwa 200 W bis etwa 750 W aufweist;
d. wobei der Laserstrahl als fokussierter Spot mit einer Spotgröße von etwa 50 µm bis etwa 250 µm auf das Werkstück gerichtet wird;
e. wobei der Laserstrahl als fokussierter Spot mit einer Leistungsdichte von mehr als 100 kW/cm², vorzugsweise von etwa 100 kW/cm² bis etwa 5 MW/cm² und noch bevorzugter von etwa 100 kW/cm² bis etwa 800 kW/cm² auf das Werkstück gerichtet wird;
so dass ein Härtebereich für die HAZ innerhalb eines Härtebereichs für das aluminiumbasierte Material liegt und dass das Laserschweißen der aluminiumbasierten Materialien mit wenig bis gar keinem Aluminiumstaub erreicht wird.

2. Verfahren nach Anspruch 1, wobei der Härtebereich für die Wiederverfestigungszone innerhalb eines Härtebereichs für das aluminiumbasierte Material liegt.

3. Verfahren nach Anspruch 1, wobei eine Mikrostruktur des aluminiumbasierten Materials, der HAZ und der Wiederverfestigungszone identisch sind.

4. Verfahren nach Anspruch 1, wobei eine Mikrostruktur des aluminiumbasierten Materials, der HAZ und der Wiederverfestigungszone identisch sind; und wobei die identische Mikrostruktur Kristallwachstumsbereiche ähnlicher Größe umfasst.

5. Verfahren nach Anspruch 15, wobei der Laserstrahl als fokussierter Punkt mit einer Leistungsdichte von weniger als 2000 kW/cm² und vorzugsweise von mehr als 100 kW/cm² auf das Werkstück gerichtet wird.

6. Verfahren nach einem der Ansprüche 1 bis 5, wobei kein Aluminiumstaub mit einer Partikelgröße von weniger als 500 Mikrometern, vorzugsweise von weniger als etwa 420 Mikrometern, gebildet wird.

7. Verfahren nach einem der Ansprüche 1 bis 5, wobei eine Menge an Aluminiumstaub in der Luft erzeugt wird, die unterhalb der Explosionsgrenze liegt.

8. Verfahren nach einem der Ansprüche 1 bis 6, wobei eine geringe Menge an Aluminiumstaub in der Luft erzeugt wird, wobei die Menge aus der Gruppe ausgewählt ist, bestehend aus weniger als 100 g, weniger als 50 g, weniger als 20 g, weniger als 1 g, weniger als 100 mg, weniger als 50 mg, weniger als 5 mg und weniger als 1 mg, weniger als 0,1 mg, weniger als 0,001 mg, etwa 50 g bis etwa 1 g, etwa 1 g bis etwa 50 mg, etwa 70 mg bis 20 mg und etwa 1 mg bis etwa 0,1 mg.

9. Verfahren nach einem der Ansprüche 6 bis 8, wobei der Aluminiumstaub eines oder mehrere der folgenden Bestandteile umfasst: Aluminium, Aluminiumoxid und Aluminiumhydroxid.

## Revendications

1. Procédé de formation d'une soudure dans des matériaux à base d'aluminium, comprenant :
a. placer une pièce dans un système laser ; la pièce consiste à placer une première pièce de matériau à base d'aluminium en contact avec une seconde pièce de matériau d'aluminium;
b. diriger un faisceau laser bleu sur la pièce à travailler, de sorte qu'une soudure est formée entre la première pièce de matériau à base d'aluminium et la seconde pièce de matériau à base d'aluminium ; dans laquelle la soudure comprend une zone affectée thermiquement (ZHA) et une zone de resolidification; et,
la méthode **caractérisée par**:
c. le faisceau laser a une puissance comprise entre 150 W et environ 1 500 W, et de préférence entre environ 200 W et environ 750 W ;
d. le faisceau laser est dirigé vers la pièce sous la forme d'un spot focalisé ayant une taille d'environ 50 µm à environ 250 µm ;
e. le faisceau laser est dirigé vers la pièce à travailler sous la forme d'un spot focalisé ayant une densité de puissance supérieure à 100 kW/cm², de préférence d'environ 100 kW/cm² à environ 5 MW/cm², et plus préférentiellement d'environ 100 kW/cm² à environ 800 kW/cm²;
de sorte que la plage de dureté de la ZHA se situe dans la plage de dureté du matériau à base d'aluminium et que le soudage au laser des matériaux à base d'aluminium soit réalisé avec peu ou pas de poussière d'aluminium.

2. Procédé de la revendication 1, dans lequel la plage de dureté de la zone de resolidification est comprise dans la plage de dureté du matériau à base d'aluminium.

3. Procédé selon la revendication 1, dans lequel la microstructure du matériau à base d'aluminium, la ZHA et la zone de resolidification sont identiques.

4. Procédé selon la revendication 1, dans lequel la microstructure du matériau à base d'aluminium, la ZHA et la zone de resolidification sont identiques ; et, dans lequel la microstructure identique comprend des régions de croissance cristalline de taille similaire.

5. Procédé de la revendication 15, dans lequel le faisceau laser est dirigé vers la pièce sous la forme d'un spot focalisé ayant une densité de puissance inférieure à 2000 kW/cm²et, de préférence, supérieure à 100 kW/cm².

6. Procédé selon l'une des revendications 1 à 5, dans lequel il n'y a pas de formation de poussière d'aluminium dont la taille des particules est inférieure à 500 microns, de préférence inférieure à 420 microns.

7. Procédé selon l'une des revendications 1 à 5, dans lequel la quantité de poussière d'aluminium en suspension dans l'air produite est inférieure aux niveaux d'explosion.

8. Procédé selon l'une des revendications 1 à 6, dans lequel une faible quantité de poussière d'aluminium en suspension dans l'air est produite, la quantité étant choisie dans le groupe constitué de moins de 100 g, moins de 50 g, moins de 20 g, moins de 1 g, moins de 100 mg, moins de 50 mg, moins de 5 mg et moins de 1 mg, moins de 0,1 mg, moins de 0,001 mg, d'environ 50 g à environ 1 g, d'environ 1 g à environ 50 mg, d'environ 70 mg à 20 mg, et d'environ 1 mg à environ 0,1 mg.

9. Procédé de l'une des revendications 6 à 8, dans lequel la poussière d'aluminium comprend un ou plusieurs éléments parmi l'aluminium, l'oxyde d'aluminium et l'hydroxyde d'aluminium.
